# EUROPÄISCHE PATENTSCHRIFT

(11) **EP 2 042 767 B1**
(45) Veröffentlichungstag und Bekanntmachung des Hinweises auf die Patenterteilung: **08.05.2019**
(21) Anmeldenummer: 08016256.3
(22) Anmeldetag: 16.09.2008
(51) Int. Cl.: F16D 48/06

(54) **Drehzahlregeleinrichtung für eine Kupplung zum Antrieb einer Maschine, System aus Drehzahlregeleinrichtung und einer übergeordneten Steuerung, Regelkupplung, Strömungsmaschine, Kühlsystem und Verfahren zur Drehzahlregelung für eine Kupplung zum Antrieb einer Maschine**
Rotation speed regulation device for a coupling for driving an engine, system with a rotation speed regulation device and a superordinate control, a regulation coupling, a fluid machine, a cooling system and method for regulating rotation speed for a coupling for driving an engine
Dispositif de réglage de la vitesse de rotation d'un embrayage destiné à entraîner une machine, système comprenant un dispositif de réglage de la vitesse de rotation et une régulation, un accouplement réglable, une machine à fluide, un système de refroidissement et procédé de réglage de la vitesse de rotation pour un embrayage destiné à entraîner une machine

(30) Priorität: 27.09.2007 DE 102007046665
(43) Veröffentlichungstag der Anmeldung: 01.04.2009
(73) Patentinhaber: MAHLE Behr GmbH & Co. KG, 70469 Stuttgart (DE)
(72) Erfinder: Hummel, Werner, 71563 Affalterbach (DE); Langenstein, Jens, 75417 Mühlacker (DE); Schultheiß, Gerold, 75173 Pforzheim (DE)
(74) Vertreter: Grauel, Andreas

(56) Entgegenhaltungen:
- US-A1- 2006 060 443

## Beschreibung

Die Erfindung betrifft eine Drehzahlregeleinrichtung für eine Regelkupplung nach den Patentansprüchen. Die Erfindung betrifft auch ein Verfahren zur Drehzahlregelung für eine Kupplung zum Antrieb einer Maschine, bei dem eine Maschinendrehzahl geregelt wird.

Eine Drehzahlregeleinrichtung der eingangs genannten Art ist in US2006/0060443 als nächstliegender Stand der Technik, und auch in DE 4124722 C2 offenbart. Diese ist ausgelegt für eine Einscheiben- oder eine Mehrscheibenkupplung trockener oder nasser Bauart, wobei die Scheiben von einem Stellglied in reibschlüssige Verbindung gebracht werden können. Das Reglungsverfahren zum Schutz der dort beschriebenen Reibungskupplung vor thermischer Überlastung ermittelt dabei eine aus Drehzahldifferenz und übertragenem Moment vorgegebene Reibleistung und wirkt auf ein Kupplungsstellglied ein, welches die Reibkupplung entweder nur ganz öffnet oder ganz schließt oder einen oder mehrere einstellbare Sollwerte abgibt oder einen zeitabhängigen Schlupfsollwert vorgibt, etwa um für das Einkuppeln und Auskuppeln bestimmte Zeitverläufe festzulegen. Insbesondere ist bei der dort beschriebenen, für einen Kraftfahrzeugantrieb vorgesehenen Reibkupplung zu vermeiden, dass sich die Kupplung - sobald die Kupplungstemperatur in ausreichendem Maße abgesunken ist - unerwartet von selbst wieder einschaltet, was zu Unfällen führen könnte. Es ist auch zu vermeiden, dass die überhitzte Kupplung vom Bedienungsmann unter Umgehung der Schutzeinrichtung eingeschaltet wird.

Ein dort beschriebenes, grundsätzlich vorteilhaftes Konzept zur Vermeidung einer Temperaturüberlastung einer Reibkupplung eignet sich nicht für eine kontinuierlich in der Drehzahl veränderbare Regelkupplung, beispielsweise in Form einer Flüssigkeitsreibungskupplung, welche dauerhaft mit Schlupf zu betreiben ist - dies im Unterschied zu der in DE 41 24 722 C2 beschriebenen Reibkupplung, welche nur in Ausnahmesituationen und kurzzeitig mit Schlupf betrieben ist.

Eine beispielhafte Drehzahlregeleinrichtung für eine Flüssigkeitsreibungskupplung ist in DE 197 10 384 A1 beschrieben, welche sich grundsätzlich für eine kontinuierlich in der Drehzahl veränderbare Regelkupplung eignet und eine Überhitzung der Regelkupplung vermeiden soll. Eine dort beschriebene Drehzahlregeleinrichtung ist noch verbesserungswürdig.

Regelkupplungen der dort beschriebenen Art erzeugen physikalisch bedingt eine Schlupfleistung genannte Wärmeleistung, welche zu einer Erhitzung der Kupplungsbauteile führt. Diese erzeugte Schlupfleistung ist proportional dem übertragenen Drehmoment und der Differenz zwischen Antriebs- und Abtriebsdrehzahl. Zur Ableitung der erzeugten Wärmeleistung und damit zur Begrenzung der Bauteiltemperaturen kann ein Gehäuse der Kupplung beispielsweise mit Kühlrippen versehen werden, welches die Wärmeübertragung zur umgebenden Luft verbessern sollen. Solche Kühlrippen sind häufig radial auf einem rotierenden Kupplungsgehäuse angebracht, was eine erzwungene Konvektion in Folge der auf die Kühlluft einwirkenden Fliehkräfte zur Folge hat.

Wünschenswert wäre eine Drehzahlregeleinrichtung, insbesondere für eine Regelkupplung zum Antrieb einer Strömungsmaschine, vorzugsweise einem Lüfter, welcher vorteilhaft zur indirekten Kühlung einer Brennkraftmaschine eines Kraftfahrzeugs eingesetzt und welcher von der Brennkraftmaschine angetrieben wird. Eine Regelkupplung der vorgenannten Art soll dem Zweck dienen, die Lüfterleistung über eine Drehzahlveränderung den Bedürfnissen der Kühlung der Brennkraftmaschine anzupassen und kann nach dem Flüssigkeitsreibungsprinzip arbeiten.

Problematisch dabei ist, dass der tatsächliche Temperaturzustand einer Kupplung gemäß dem in DE 197 10 384 A1 beschriebenen Verfahren nicht berücksichtigt wird. Dies führt dazu, dass meistens, bei dynamischem Überschreiten einer Grenzlinie in einem Kennlinienfeld, die tatsächliche Temperatur der Kupplung aufgrund der Vorgeschichte jedoch noch unterhalb der zulässigen Grenze liegt. Dies kann zu einer unerwünscht häufigen maximalen Aktivierung der Kupplung und damit des Lüfters führen, was eine unnötig hohe Aufnahme von Antriebsenergie und eine unnötige Emission von Geräuschen zur Folge hat. Insbesondere bei Anforderungen an die Lüfterleistung und dadurch erforderlichen Übertragungsmomenten der Kupplung verschiebt sich die thermische Begrenzung der Kupplung immer mehr hin zu Antriebsdrehzahlen, welche Motordrehzahlen unterhalb der Nennleistungsdrehzahl entsprechen. Im normalen Fahrbetrieb ist dann immer häufiger mit den störenden Schutzaktivierungen der Kupplung zu rechnen. Erschwerend kommt hinzu, dass der Betrag der erzeugten Wärmeleistung bei Zuschaltgraden im Bereich von 30 % bis 70 % besonders groß ist, so dass die größten Defizite in der Wärmebilanz im Bereich von 30 % bis 40 % Zuschaltung des Lüfters auftreten, da hier die abgeführte Wärmeleistung besonders gering ist.

An dieser Stelle setzt die Erfindung an, deren Aufgabe es ist, eine Vorrichtung - insbesondere eine Drehzahlregeleinrichtung, ein System sowie eine Regelkupplung, eine Strömungsmaschine und ein Kühlsystem - und ein Verfahren zur Drehzahlregelung für eine Kupplung zum Antrieb einer Maschine anzugeben, die in besonders vorteilhafter Weise den Gegebenheiten einer zum Antrieb einer Strömungsmaschine vorgesehenen Regelkupplung, vorzugsweise in Form einer Flüssigkeitsreibungskupplung, Rechnung tragen.

Die Aufgabe hinsichtlich der Drehzahlregeleinrichtung wird durch die Erfindung mittels einer eingangs genannten Drehzahlregeleinrichtung gelöst, bei der erfindungsgemäß
- der Algorithmus zur Bestimmung der Kupplungstemperatur für eine kontinuierlich in der Drehzahl veränderbare Regelkupplung, vorzugsweise in Form einer Flüssigkeitsreibungskupplung, die dauerhaft mit Schlupf betreibbar ist, ausgelegt ist und
- das Rechenglied weiter aufweist: eine zweite Logikeinheit mit einem zweiten Komparator zum Vergleich der Steuerdrehzahl mit einem von einer übergeordneten Steuerung vorgegebenen Solldrehzahl und einer zweiten Logik zur Vorgabe einer Korrekturdrehzahl zur Korrektur einer Istdrehzahl, wobei bei Überschreiten des zulässigen Temperaturwerts durch die berechnete Kupplungstemperatur zum Herabsetzen der Kupplungstemperatur durch die erste Logik die Steuerdrehzahl zur Ermittlung der Korrekturdrehzahl vorgebbar ist.

Die übergeordnete Steuerung ist vorteilhaft in Form einer Motorkühlungssteuerung gebildet. Die Solldrehzahl ist vorteilhaft in Form einer Strömungsmaschinen-Solldrehzahl gebildet.

Die Aufgabe hinsichtlich des Verfahrens wird von der Erfindung mit einem Verfahren der eingangs genannten Art gelöst, aufweisend die Schritte:
- Berechnen einer Kupplungstemperatur aus zugeführter, abgeführter und gespeicherter Wärmeleistung der Kupplung;
- Vergleichen der berechneten Kupplungstemperatur mit einem zulässigen Temperaturwert und Vorgeben einer Steuerdrehzahl in Abhängigkeit vom Vergleich;
- Einstellen und/oder Monitoren eines Betriebszustandes der Kupplung.

Erfindungsgemäß ist weiter vorgesehen, dass
- für eine kontinuierlich in der Drehzahl veränderbare Regelkupplung in Form einer Flüssigkeitsreibungskupplung, die dauerhaft mit Schlupf betrieben wird, eine Kupplungstemperatur bestimmt wird;
- die Steuerdrehzahl mit einer von einer übergeordneten Steuerung vorgegebenen Solldrehzahl verglichen wird und eine Korrekturdrehzahl vorgegeben und eine Istdrehzahl korrigiert wird, wobei
- bei Überschreiten des zulässigen Temperaturwerts durch die berechnete Kupplungstemperatur zum Herabsetzen der Kupplungstemperatur eine Steuerdrehzahl zur Ermittlung der Korrekturdrehzahl vorgegeben wird.

Die Erfindung hat erkannt, dass die Berechnung einer Kupplungstemperatur aus zugeführter, abgeführter und gespeicherter Wärmeleistung der Kupplung bei einer dauerhaft mit Schlupf betriebenen Regelkupplung zum einen in Koordinierung mit einer übergeordneten Steuerung erfolgen sollte und zum anderen bei Überschreiten des zulässigen Temperaturwerts durch die berechnete Kupplungstemperatur eine Steuerdrehzahl zur Ermittlung der Korrekturdrehzahl vorgegeben werden sollte. Vorzugsweise entspricht die Steuerdrehzahl der Größe der Antriebsdrehzahl der Kupplung. So kann anstelle einer von der übergeordneten Steuerung vorgegebenen Solldrehzahl dem Stellglied als Eingangswert eine Drehzahl vorgegeben werden, welche aus der Korrekturdrehzahl und/oder der Istdrehzahl gebildet wird. Mit anderen Worten, im Ergebnis wird eine korrigierte Solldrehzahl als Eingangsgröße für das Stellglied, vorzugsweise für einen Regler im Stellglied, vorgegeben. Dies führt im Effekt zu einer Korrektur der tatsächlichen Drehzahl der Maschine. Vorzugsweise wird die der Steuerung vorgegebene Drehzahl subtraktiv aus Korrekturdrehzahl und Istdrehzahl gebildet. Dies führt - bei einer aufgrund der Berücksichtigung der gespeicherten Wärmeleistung vorteilhaft bestimmten thermischen Überbelastung der Kupplung und unter Vermeidung unerwünscht häufiger maximaler Aktivierungen der Kupplung - dazu, dass die Kupplung in solch einem Zustand zu einem größtmöglichen Eingriff veranlasst wird und/oder unter einem kleinstmöglichen Schlupfwert arbeitet. Da gemäß dem Konzept der Erfindung der Kupplung bei der Gefahr einer thermischen Überbelastung eine Steuerdrehzahl zur Ermittlung der Korrekturdrehzahl vorgegeben wird, ist berücksichtigt, dass einerseits der von der Strömungsmaschine zu besorgende Kühlbetrieb nach Maßgabe der übergeordneten Steuerung aufrechterhalten wird und andererseits eine thermische Überbelastung der Kupplung vermieden wird. Die Erfindung hat erkannt, dass für eine kontinuierlich in der Drehzahl veränderbare Regelkupplung, welche dauerhaft mit Schlupf betrieben ist, der Konflikt zwischen der übergeordneten Steuerung und der daran angeschlossenen Drehzahlregeleinrichtung aufhebbar ist - maßgeblich dafür ist der Steuerfreiheitsgrad der kontinuierlich veränderbaren Regelkupplung. Beispielsweise kann dazu eine Menge einer Kupplungsflüssigkeit in einem Übertragungsbereich der Kupplung infolge eines Stellsignals des Stellgliedes eingestellt werden. Beispielsweise kann mit dem Stellsignal ein Ventil, vorzugsweise ein Magnetventil, gesteuert werden mit dem der Füllstand der Kupplungsflüssigkeit im Übertragungsbereich reguliert wird. Ein Steuerfreiheitsgrad ist gemäß der Erfindung lediglich eingeschränkt durch eine zweckmäßige Lastcharakteristik für die Strömungsmaschine. Ein Steuerfreiheitsgrad bei üblichen Reibungskupplungen, beispielsweise der in DE 41247722 C2, ist zur Vermeidung von Unfällen nicht gegeben. Im Unterschied zu einer solchen Reibungskupplung wird eine Flüssigkeitsreibungskupplung praktisch immer unter Schlupf betrieben, da eine Kraftübertragung erst aufgrund einer Differenzgeschwindigkeit eines Antriebs- und Abtriebs-Kupplungsteils möglich ist.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Erfindungsgemäß weist das Stellglied einen Regler für eine von der Korrekturdrehzahl korrigierte Istdrehzahl zur Erzeugung eines Stellsignals, beispielsweise eines PWM-Signals für ein Ventil zur Regulierung der Kupplungsflüssigkeit, unter Berücksichtigung eines von der Korrekturdrehzahl und/oder einer Antriebsdrehzahl ausgelösten Kennfeldwerts auf. Dies berücksichtigt in angemessener Weise eine Lüftercharakteristik. Insbesondere kann mittels einer bekannten Antriebsdrehzahl und einem Vorsteuerkennfeld ein Stellsignal erzeugt werden, welches bereits im Nahbereich eines endgültigen Stellsignals liegt. Vorzugsweise kann ein vom Vorsteuerkennfeld geliefertes Stellsignal im Stellglied additiv durch ein beispielsweise von einem Regler, insbesondere einem PI-Regler, geliefertes Stellsignal zur Bildung eines endgültigen Stellsignals ergänzt werden.

Im Rahmen einer besonders bevorzugten ersten Variante der Erfindung ist das vor allem bei Flüssigkeitsreibungskupplungen auftretende Problem erkannt worden, dass eine aufgrund fester und flüssiger Bestandteile der Kupplung einheitliche Handhabung zugeführter und abgeführter gespeicherter Wärmeleistung der Kupplung nur bedingt zu bewerkstelligen ist. Die Erfindung hat gemäß der hier ausgeführten ersten Variante erkannt, dass in erster Linie die thermische Belastung einer Kupplungsflüssigkeit maßgeblich für eine beispielsweise mit dem Stell- und/oder Monitorglied erfolgende, Steuerung und/oder Lebensdauereinschätzung der Kupplung maßgeblich ist. Diesem weiterführenden Konzept der ersten Variante folgend ist der Algorithmus zur Bestimmung einer zugeführten Wärmeleistung ausgelegt, eine Steuerdrehzahl aus einer in Form einer Schlupfleistungskennlinie hinterlegten Differenz aus Kupplungsantriebsdrehzahl und Kupplungsabtriebsdrehzahl zu bestimmen. Vorzugsweise ist dazu ein Speicher mit der Schlupfleistungskennlinie vorgesehen. Eine Schlupfleistungskennlinie kann beispielsweise für unterschiedliche Betriebszustände der Kupplung und im Hinblick auf eine Lüfterkennlinie durch exemplarische Messungen bestimmt und/oder kalibriert werden.

Vorzugsweise ist der Algorithmus zur Bestimmung einer abgeführten Wärmeleistung aus einer Wärmeableitungskennlinie ausgelegt. Insbesondere ist dazu ein Speicher mit der Wärmeableitungskennlinie vorgesehen. Eine Wärmeableitungskennlinie ist zweckmäßig durch exemplarische Messungen und/oder eine Kalibrierung bestimmt.

Einem weiterführenden Konzept der Erfindung gemäß einer zweiten Variante folgend - zusätzlich oder alternativ zur ersten Variante - ist der Algorithmus zur Bestimmung der Lagerflüssigkeitstemperatur des Kupplungshauptlagers unter dauerhaftem Schlupf ausgelegt. Die Erfindung hat erkannt, dass - zusätzlich oder alternativ - außer der Kupplungsflüssigkeitstemperatur, ggf. auch, die Lagerflüssigkeitstemperatur maßgeblich für eine Flüssigkeitsreibungskupplung ist. Zusammenfassend geht die erste und/oder zweite Variante der Erfindung dabei von der Erkenntnis aus, dass zusätzlich oder alternativ zu den festen Bauteilen der Kupplung eine Steuerung bzw. ein Betriebszustand der Kupplung ausreichend bzw. maßgeblich durch eine Kupplungsfiüssigkeitscharakterisierung und/oder Lagerflüssigkeitscharakterisierung erfolgen kann.

In besonders vorteilhafter Weise ist der Algorithmus zur Bestimmung der Wärmeableitung einer Verbindung zwischen einem Übertragungsbereich und einem Kupplungshauptlager unter dauerhaften Schlupf ausgelegt. Die Erfindung hat in Weiterbildung der zweiten Variante vorteilhaft erkannt, dass eine Verbindung zwischen dem Übertragungsbereich und Hauptlager der Kupplung bei der Bestimmung der Lagerflüssigkeitstemperatur zu berücksichtigen ist, da diese eine gewisse Verzögerungswirkung bei der Wärmeleitung und eine gewisse Wärmekapazität aufweist.

Insgesamt führt das Konzept gemäß der ersten Variante der Erfindung zu einem zeitlich stetig ansteigenden und sättigenden Verlauf der Kupplungsflüssigkeitstemperatur, wobei die Steigung des Verlaufs im Wesentlichen stetig abnimmt. Gemäß dem Konzept der zweiten Variante ist ein zeitlicher Temperaturverlauf für die Lagerflüssigkeit vorgesehen, welcher ebenfalls stetig ansteigt und sättigt, wobei jedoch die Steigung aufgrund des wärmeleitenden und wärmespeichernden Elements der Verbindung zwischen Übertragungsbereich und Hauptlager der Kupplung zunächst eine Zunahme der Steigung der Temperatur und ab einem bestimmten Bereich wieder eine Abnahme der Temperatursteigung bewirkt.

Die Erfindung führt auf ein System aus einer Drehzahlregeleinrichtung der vorgenannten Art und einer übergeordneten Steuerung, beispielsweise einer Motorkühlungssteuerung. Dabei ist insbesondere vorgesehen, dass die zweite Logikeinheit einen mit der übergeordneten Steuerung signalverbundenen Eingang für die Solldrehzahl und einen mit der ersten Logikeinheit signalverbundenen Eingang für die Steuerdrehzahl aufweist.

Das System ist in vorteilhafter Weise dazu vorgesehen, auch Betriebsparameter des Fahrzeugs zu berücksichtigen, insbesondere Betriebsparameter wie die Motordrehzahl, die Motorbelastung und die Fahrgeschwindigkeit des Fahrzeugs - vorzugsweise sind dafür entsprechende Eingänge bei der übergeordneten Steuerung des Systems vorgesehen.

Die Erfindung führt auf eine Regelkupplung zum Antrieb einer Strömungsmaschine, vorzugsweise einem Lüfter, welche kontinuierlich in der Drehzahl veränderbar ist und vorzugsweise in Form einer Flüssigkeitsreibungskupplung, die dauerhaft mit Schlupf betreibbar ist, realisiert ist und eine Drehzahlregeleinrichtung gemäß dem Konzept der Erfindung aufweist.

Vorteilhaft ist bei einer derartigen Regelkupplung ein Antriebskupplungsteil vorgesehen, das über eine Welle mit einem Antrieb verbunden ist und ein Abtriebskupplungsteil vorgesehen, das mit einem strömungserzeugenden Drehteil, insbesondere einem drehbaren Gehäuse, verbunden ist. Zwischen dem Antriebskupplungsteil und dem Abtriebskupplungsteil ist in einem Übertragungsbereich eine Kupplungsflüssigkeit angeordnet, deren Menge infolge des Stellsignals des Stellgliedes einstellbar ist. Die Kupplung wird je nach Füllstand dauerhaft mit unterschiedlichem Schlupf betrieben. Das Lager des Antriebskupplungsteils und/oder Abtriebskupplungsteils weist eine Lagerflüssigkeit auf. Die Kupplungsflüssigkeit ist insbesondere in Form eines Kupplungsöls gebildet. Die Lagerflüssigkeit ist insbesondere in Form eines Lagerfetts gebildet.

Die Erfindung führt auch auf eine Strömungsmaschine und ein Kühlsystem gemäß den weiteren nebengeordneten Ansprüchen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1:: eine Flüssigkeitsreibungskupplung zum Antrieb eines Lüfters gemäß einer besonders bevorzugten Ausführungsform einer Regelkupplung, bei der ein Übertragungsbereich mit einer Kupplungsflüssigkeit und Kupplungslager mit einer Lagerflüssigkeit kenntlich gemacht ist;
- Fig. 2: ein typisches Schlupfleistungskennfeld mit einer beispielhaften Begrenzungslinie einer zulässigen Schlupfleistung für einen stationären Betrieb einer in Fig. 1 gezeigten Flüssigkeitsreibungskupplung;
- Fig. 3: eine besonders bevorzugte Komponentenanordnung bei einem Kühlsystem gemäß einer bevorzugten Ausführungsform der Erfindung;
- Fig. 4: ein Blockschaubild einer Drehzahlregeleinrichtung mit einem Rechenglied und einem Regler zum Betrieb einer Kupplung, wie sie beispielsweise in Fig. 1 dargestellt ist; z. B. im Rahmen eines in Fig. 3 dargestellten Kühlsystems;
- Fig. 5: der in Fig. 4 zum Überwachen der Kupplungstemperatur dargestellte Algorithmus der Drehzahlregeleinrichtung mit einem links dargestellten Teil zur Bestimmung der Temperatur sowie einer rechts dargestellten Logikeinheit mit einem ersten Komparator und einer ersten Logik;
- Fig.6: eine besonders bevorzugte Realisierung eines Rechenglieds zur Berechnung einer Kupplungsflüssigkeitstemperatur der Kupplung in einem in Fig. 5 dargestellten Algorithmus gemäß einer bevorzugten Ausführungsform der ersten Variante der Erfindung;
- Fig. 7: eine besonders vorteilhafte Ergänzung der in Fig. 6 dargestellten Ausführungsform zur Berechnung einer Lagerflüssigkeitstemperatur gemäß einer besonders bevorzugten Ausführungsform der zweiten Variante der Erfindung.

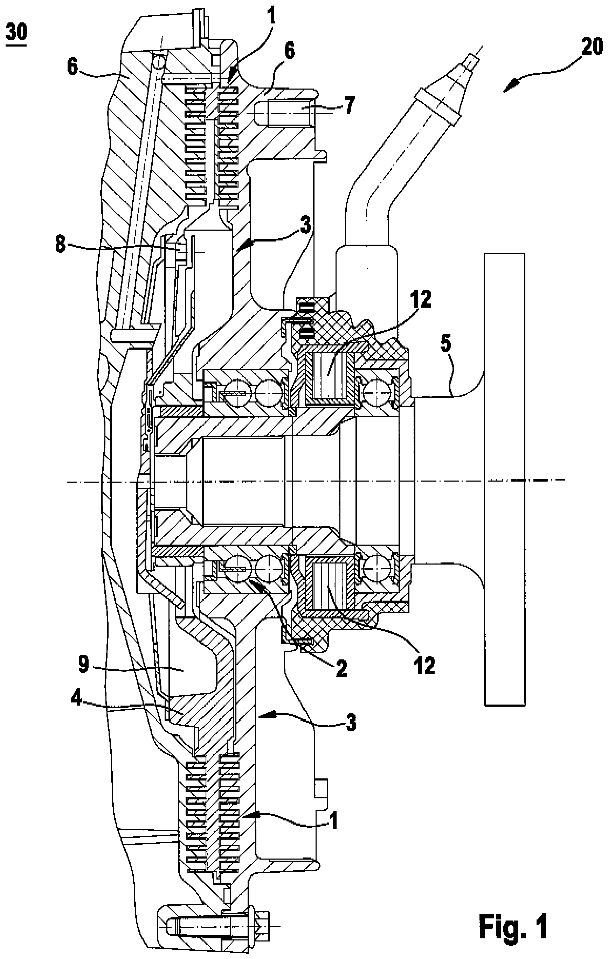

Fig. 1 zeigt den konstruktiven Aufbau eines typischen Beispiels einer Kupplung 20 in Form einer Lüfterkupplung. Ein antriebsseitiger Teil 4 der Kupplung 20 wird über eine Welle 5 von einem nicht näher dargestellten Antrieb angetrieben. Der antriebsseitige Teil 4 treibt unter Erzeugung einer Schlupfleistung über eine im Übertragungsbereich 1 vorgesehene Kupplungsflüssigkeit in Form von Öl einen abtriebsseitigen Teil 6 an, der in diesem Beispiel ein Gehäuse der Kupplung 20 bildet. Vom Übertragungsbereich 1 fließt ein Teil der erzeugten Wärme auch zu dem temperaturkritischen Hauptlager 2 über einen die Verbindung 3 bildenden Teil der Kupplung 20. Das Gehäuse trägt über eine hier nicht ausführlich dargestellte Verbindung 7 am abtriebsseitigen Teil 6 den hier nicht näher dargestellten Lüfter 30.

Die im Übertragungsbereich 1 befindliche Kupplungsflüssigkeitsmenge kann über ein Ventil 8 gesteuert werden, das vorliegend schematisch dargestellt ist. Das übertragene Drehmoment der Kupplung 20 ist proportional der im Übertragungsbereich befindlichen Ölmenge. Bei im Vergleich zur Antriebsdrehzahl geringen Abtriebsdrehzahl befindet sich ein Großteil der Kupplungsflüssigkeit außerhalb des Übertragungsbereichs 1, in einem Vorratsbereich 9. Das Ventil 8 kann mittels eines Elektromagneten 12 betätigt werden. Die Einschaltdauer des Elektromagneten 12 und somit der Füllstand der Kupplungsflüssigkeit wird über ein, mit der in dieser Erfindung beschriebenen Drehzahleinrichtung erzeugtes, pulsweitenmoduliertes Signal (PWM) gesteuert.

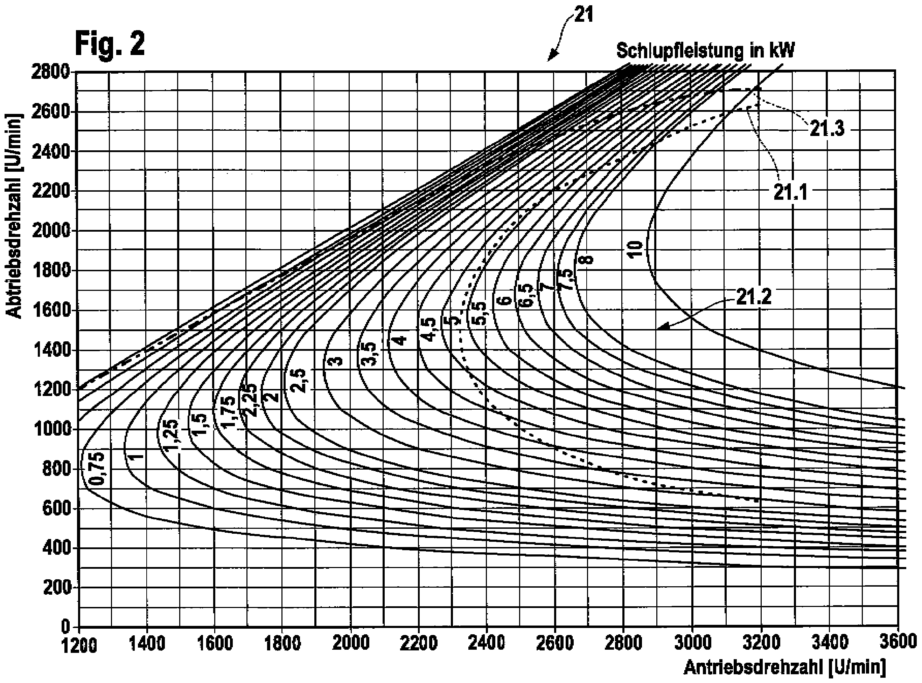

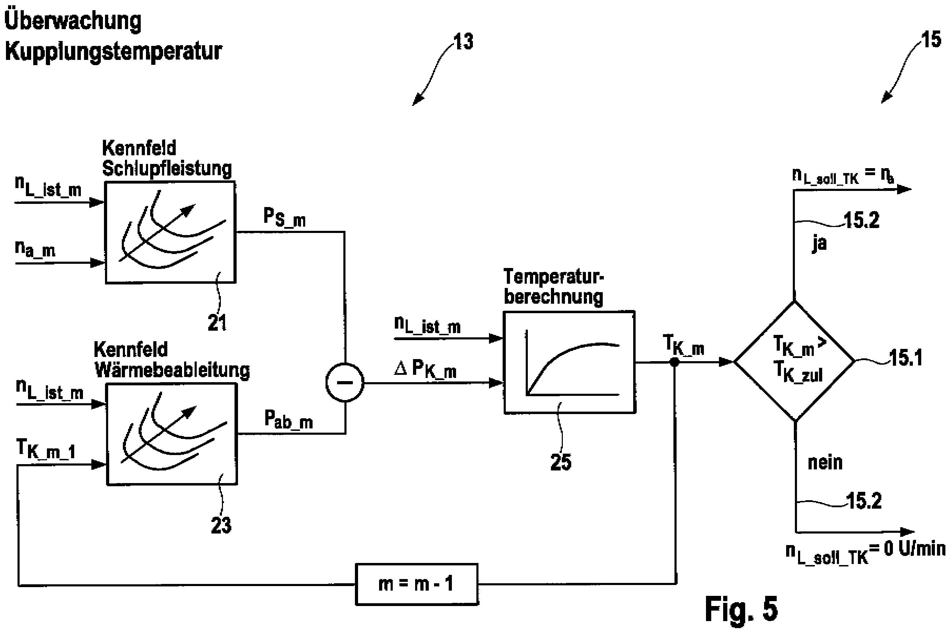

Fig. 2 zeigt ein typisches Schlupfleistungskennfeld 21 mit einer beispielhaften Begrenzungslinie 21.1 der zulässigen Schlupfleistung für einen stationären Betrieb der Kupplung 20. Die Kurvenschar gibt die erzeugte Wärmeleistung in Abhängigkeit der Antriebsdrehzahl und Abtriebsdrehzahl der Teile 4, 6 für ein bestimmtes Lastelement, beispielsweise einen Lüfter, an. Im Stationärbereich entspricht diese erzeugte Wärmeleistung auch der abgeleiteten Wärmeleistung 23 - wie sie schematisch als Kennfeld in Fig. 5 dargestellt ist - hierzu stellt sich die notwendige Bauteiltemperatur in der Kupplung 20 ein. Die Begrenzungslinie 21.1 repräsentiert so beispielhaft eine bestimmte zulässige Bauteiltemperatur der Kupplung. Der Bereich 21.2 rechts von der Begrenzungskurve 21.1 führt zu unzulässig hohen Bauteiltemperaturen der Kupplung. Es ist zu erkennen, dass bei Antriebsdrehzahlen oberhalb von 2350 U/min Einschränkungen der zulässigen Abtriebsdrehzahlen in Kauf genommen werden müssen. Die Kurve 21.3 beschreibt die maximal erreichbare Abtriebsdrehzahl.

Zur Vermeidung unzulässig hoher Kupplungstemperaturen sollten demgemäß Zustände rechts von der Begrenzungslinie 21.1 vermieden werden. Bei temperaturgesteuerten Kupplungen, welche z. B. mit Hilfe eines Bimetalles auf die Temperatur der die Kupplung anströmenden Luft reagieren, wird bisweilen ein zweites Bimetall im Inneren der Kupplung verwendet, welches bei Überschreiten einer vorbestimmten Temperatur die Kupplung maximal aktiviert, d.h. den kleinstmöglichen Schlupf anstrebt. Bei von einer übergeordneten Steuerung 40, vorliegend in Form einer Motorsteuerung elektronisch fremdgesteuerten Kupplungen ist dies zwar prinzipiell auch möglich, wird aber nicht angewandt, da dann unerwünschte Wechselwirkungen zwischen der übergeordneten Steuerung 40 und der Bimetallfunktion auftreten. Beispielsweise würde die elektronische Steuerung versuchen, einer durch die innere Temperaturüberwachung der Kupplung ausgelöste Erhöhung der Antriebsdrehzahl wieder durch die ihr zur Verfügung stehenden Regelorgane entgegenzuwirken. Bei derartigen fremdgesteuerten Antrieben wird bisher zur Vermeidung von Übertemperaturen der Kupplung die Begrenzungskennlinie 21.1 von Fig. 2 in der Steuerung abgelegt und bei einer Überschreitung derselben die Kupplung 20 maximal aktiviert. Nachteilig ist hier, dass der tatsächliche Temperaturzustand der Kupplung nicht berücksichtigt wird - man geht vom ungünstigsten Zustand aus, in diesem Fall dem stationären Zustand. Im praktischen Fahrbetrieb sind solche stationären Zustände jedoch selten, so dass meistens bei dynamischem Überschreiten der Grenzlinie die Temperatur der Kupplung aufgrund der Vorgeschichte noch unterhalb der zulässigen Grenze liegt. Die Kupplung 20 verfügt über eine bestimmte Wärmekapazität, d.h. eine thermische Masse, welche die Bauteiltemperatur der erzeugten Wärmeleistung zeitlich hinterherfolgen lässt. Die direkte Reaktion gemäß der stationären Begrenzungskennlinie 21.1 führte demzufolge zu einem unerwünscht häufigen maximalen Aktivieren der Kupplung 20 und damit des Lüfters, was eine unnötig hohe Aufnahme von Antriebsenergie und eine unnötige Emission von Geräuschen zur Folge hätte.

Insbesondere bei immer weiter gesteigerten Anforderungen an die Lüfterleistung und damit notwendigen Übertragungsmomenten der Kupplung 20 verschiebt sich die thermische Begrenzung der Kupplung 20 immer mehr hin zu Antriebsdrehzahlen, welche Motordrehzahlen unterhalb der Nennleistungsdrehzahl entsprechen. Im normalen Fahrbetrieb wäre dann immer häufiger mit den störenden Schutzaktivierungen der Kupplung 20 zu rechnen.

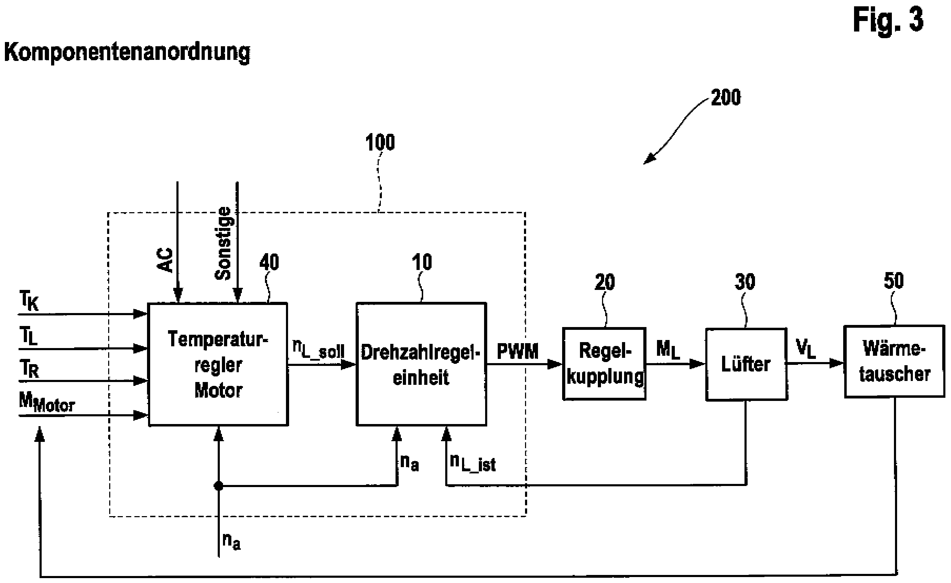

Fig. 3 zeigt das Blockschaltbild einer Komponentenordnung eines Kühlsystems 200 mit einer Regelung eines Lüfterantriebes gemäß dem Konzept der Erfindung.

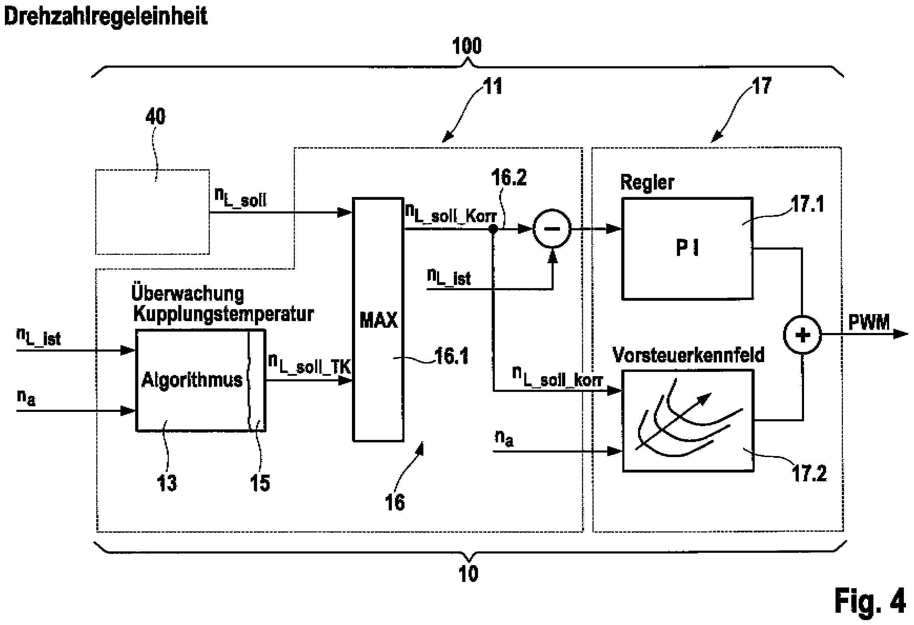

Fig. 4 zeigt den Aufbau der in Fig. 3 gezeigten Drehzahlregeleinheit 10.

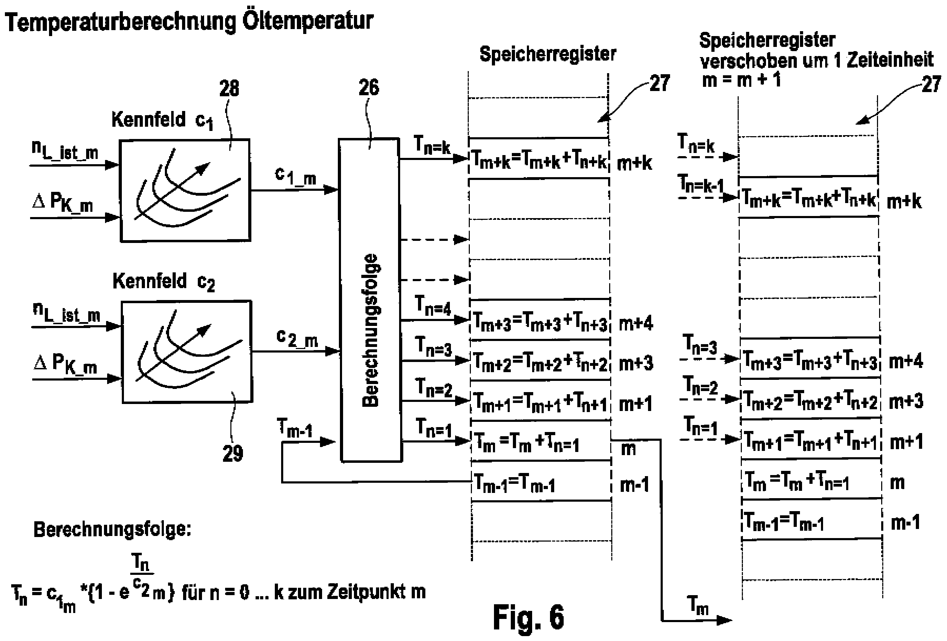

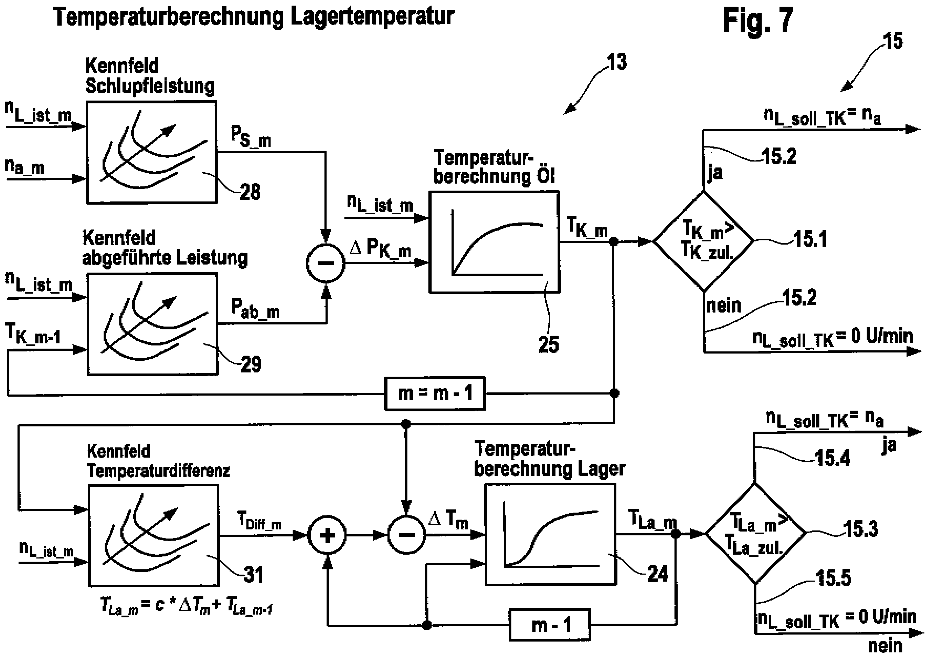

Das Konzept der Erfindung schafft - wie in Fig. 3 dargestellt - die Möglichkeit, die maximale Aktivierung der Kupplung 20 zum Eigenschutz bei einer fremdgesteuerten, d.h. von einer übergeordneten Steuerung 40 gesteuerten Kupplung von der Bauteiltemperatur abhängig zu gestalten, ohne diese explizit zu messen. Hierzu wird eine in einem System 100 aus übergeordneter Steuerung 40 in Form der Motorsteuerung aktive Berechnungsvorschrift der Drehzahlregeleinrichtung 10 vorgeschlagen, welche den thermischen Zustand der Kupplung aufgrund von zuvor ermittelten Kenngrößen simuliert. Die maximale Aktivierung der Kupplung 20 zum Schutz vor thermischer Überlastung erfolgt dann auf der Basis der durch Simulation errechneten Temperatur. Hierdurch kann die Anzahl der maximalen Zuschaltungen eines Lüfters 30 zum Eigenschutz erheblich reduziert werden. Eine konkrete Ausführung eines entsprechenden Algorithmus 13 ist in Fig. 4 und Fig. 5 in Verbindung mit einer Ausführungsform gemäß einer ersten Variante in Fig. 6 und einer Ausführungsform gemäß einer zweiten Variante in Fig. 7 gezeigt.

Gemäß der zweiten Variante kann auch die Temperatur des sich in der Kupplung befindlichen Wälzlagers simuliert werden. Dieser Wert kann ebenfalls zum aktiven Eigenschutz der Kupplung 20 gemäß dem Konzept der Erfindung herangezogen werden.

Wie in Fig. 3 gezeigt wird grundsätzlich die in der übergeordneten Steuerung 40, d.h. im Temperaturregler des Motors, ermittelte Lüftersolldrehzahl n_{L soll} unter Berücksichtigung der aktuellen Lüfteristdrehzahl n_{L ist} in eine pulsweitenmodulierte Steuergröße PWM eines Aktuators für die Regelkupplung 20 überführt.

Gemäß Fig. 4 wird in einem zweiten Komparator 16.1 einer zweiten Logineinheit 16 ein Maximalwertvergleich zwischen der Lüftersolldrehzahl n_{L soll} gemäß den Anforderungen der Motorkühlung und einer aus der Überwachung der Kupplungstemperatur resultierenden Lüftersolldrehzahl n_{L soll TK} durchgeführt. Der maximale Wert der beiden Größen wird in einer zweiten Logik 16.2 der Logikeinheit 16 ausgewählt und als neuer Sollwert n_{L soll korr} an ein Stellglied 17 - darin einem Regler 17.1 und einem Vorsteuerkennfeld 17.2 - weitergegeben. Der Regler 17.1 ist vorliegend als Pl-Regler ausgebildet und liefert interaktiv einen PWM-Wert, welcher additiv mit einem vom Vorsteuerkennfeld gelieferten PWM-Wert ein Steuersignal mit einem endgültigen PWM-Wert erzeugt. Das Vorsteuerkennfeld enthält Erfahrungswerte, welche unter Berücksichtigung der Korrekturdrehzahl n_{L soll korr} und einer tatsächlichen Antriebsdrehzahl n_{A} ausgewählt werden. Vorliegend wurden aus Erfahrungswerten Steuer-PWM-Werte in Abhängigkeit der Antriebs- und der geforderten Solllüfterdrehzahl bestimmt. Dies hat den Vorteil, dass eine Lüfterdrehzahl durch den Pl-Regler nicht komplett eingeregelt werden muss, sondern ein PWM -Wert bereits in der richtigen Größenordnung vorgesehen wird - dies vermindert erheblich Regelaufwand und Regelzeit. Der PWM-Wert steuert den oben genannten Aktuator, vorliegend in Form eines nicht näher dargestellten Magnetventils, zur Regulierung des Füllstandes der Kupplungsflüssigkeit, was wiederum das Schlupfmaß der Kupplung bestimmt.

Die Überwachung der Kupplungstemperatur erfolgt gemäß der in Fig. 5 gezeigten zusätzlichen Struktur eines Algorithmus. In einem ersten Kennfeld 21 wird die zu einem Zeitpunkt m erzeugte Schlupfleistung P_{S m} als Funktion der Antriebsdrehzahl n _{a m} und der Lüfterdrehzahl n_{L Ist m} abgelegt. Die Schlupfleistung ist außer von den variablen Drehzahlen von der Drehmomentaufnahme des Lüfters 30 abhängig. Der Verlauf dieses Drehmomentes über der Lüfterdrehzahl ist vorliegend aus exemplarischen Messungen unter den betroffenen Betriebsbedingungen bekannt.

In einem zweiten Kennfeld 23 ist die abgeleitete Wärmeleistung P _{ab m} zum Zeitpunkt m abgelegt. Diese ist vorrangig von dem Temperaturzustand der Kupplung 20 zum Zeitpunkt m-1, beschrieben durch T_{K m-1} und der Gehäusedrehzahl und der Abtriebsdrehzahl der Kupplung 20, z. B. der Lüfterdrehzahl n_{L} als variable Größe abhängig. Die Werte dieses Kennfeldes 23 werden ebenfalls anhand von exemplarischen Messungen ermittelt. Aus der Differenz der zu- und abgeführten Wärmeleistung ΔP_{K m} kann dann die Auswirkung auf den zukünftigen Temperaturverlauf 25 berechnet werden. Untersuchungen haben gezeigt, dass bei den gegebenen thermischen Zeitkonstanten der hier betrachteten Systeme von Strömungsmaschinen im Rahmen von Kühlsystemen 200, wie dem in Fig. 3, die Zu- bzw. Abfuhr einer Wärmeleistung ca. 15 min nachwirkt. Die Nachwirkung ist mit einem physikalischen Ausgleichsvorgang vergleichbar und verläuft entsprechend einer e-Funktion.

Am Ende dieses Berechnungsschrittes - welcher anhand von zwei Varianten in Fig. 6 und Fig. 7 noch weiter erläutert wird - erhält man den Temperaturverlauf 25, d.h. die Temperatur zum Zeitpunkt m. Diese wird einerseits rekursiv wieder verwendet zur Berechnung der abgeführten Wärmeleistung im nächsten Schritt. Andererseits wird diese Temperatur T_{K m} ein einem ersten Komparator 15.1 einer ersten Logikeinheit 15 verglichen mit einer zulässigen Kupplungsöltemperatur T_{K zul} und damit der Wert der Solldrehzahl n_{L soll} bestimmt. Wenn die errechnete Temperatur T _{K m} den Grenzwert übersteigt, wird in einer ersten Logik 15.2 n_{L soll TK} gleich n_{A} gesetzt. Damit nimmt die Kupplung den kleinstmöglichen Schlupfwert an und die weitere Wärmefreisetzung wird minimiert. Im anderen Fall wird in der ersten Logik 15.2 n_{L soll TK} gleich 0 gesetzt und ist damit ohne Wirkung auf den weiteren Ablauf.

Gemäß einer ersten Variante ist die Berechnung der Öltemperatur Tₘ gemäß Fig. 6 signifikant. Die eigentliche Berechnung des Temperaturverlaufs 25 erfolgt mittels einer in Fig. 6 unten beispielhaft angegebenen e-Funktion in einer Berechnungsfolge 26 für den zeitlichen Verlauf 25, beginnend zum Zeitpunkt n=0 bis zum Zeitpunkt n=k, wobei der zeitliche Abstand dieser beiden Punkte ca. 15 min betragen sollte. Die Rechnung wird zum Zeitpunkt m durchgeführt und errechnet die Auswirkung des Ereignisses zum Zeitpunkt m für k Schritte. Die Gleichung der Berechnungsfolge 26 ist in Fig. 6 explizit angegeben. Die errechneten k Werte zum Zeitpunkt m werden in ein Speicherregister 27 eingetragen und dort akkumuliert. Das Speicherregister 27 wird zu jedem Zeitschritt m um einen Schritt vorgeschoben, der akkumulierte Wert der Temperatur zum Zeitpunkt m kann dann ausgelesen werden.

Die Berechnungsfolge 26 für den Temperaturverlauf 25 ist durch die Parameter c₁ und c₂ der Kennfelder 28, 29 adaptierbar. Diese beiden Parameter beschreiben die Dynamik des Temperaturverlaufs und sind abhängig von der Lüfterdrehzahl n_{L Ist m} und der Wärmeleistungsdifferenz ΔP_{K m}. Die entsprechenden Kennfelder 28, 29 werden auch exemplarisch ermittelt.

Somit kann in den laufenden Lüfterbetrieb im Fahrzeug eingegriffen und die Lüfterkupplung 20 wirkungsvoll vor einer thermischen Überlastung geschützt werden.

Der Rechenalgorithmus 13 kann außerdem genutzt werden, um bei in Fig. 3 gezeigten vorgegebenen Betriebsparametem wie Motordrehzahl, Motorbelastung und Fahrgeschwindigkeit des Fahrzeuges (T_{K}, T_{L}, T_{R}, M_{Motor}) im Nachhinein nach einer Messung oder im Voraus aufgrund einer Annahme die thermische Belastung des Kupplungsöls zu berechnen. Die errechneten Daten liefern einen wesentlichen Beitrag zu Lebensdauerabschätzungen des gesamten Kühlsystems 200.

Neben dem Kupplungsöl im Übertragungsbereich 1 ist das Wälzlager 2 und hier insbesondere das eingesetzte Wälzlagerfett für die Lebensdauer der Kupplung 20 mitverantwortlich. Der entscheidende Parameter für den Verschleiß des Wälzlagerfettes ist ebenfalls die Temperatur. In einer Weiterführung des Erfindungsgedankens kann gemäß einer zweiten Variante auf der Basis der errechneten Öltemperatur auch die Lagertemperatur errechnet werden. Die zugehörige Erweiterung des Algorithmus ist in Fig. 7 dargestellt. Hier wird die errechnete Öltemperatur T_{K m} als Basis für die Berechnung der Lagertemperatur T_{La m} herangezogen. In dem Kennfeld 31 der Temperaturdifferenz wird die Temperaturdifferenz T_{Diff m} zwischen Öltemperatur und Lagertemperatur im Beharrungszustand abgebildet, diese ist abhängig von der Öltemperatur 25 und der Lüfterdrehzahl und wird exemplarisch ermittelt. Zu dieser Temperatur wird die zuletzt errechnete Lagertemperatur T_{La m-1} addiert, diese Summe entspricht dann der Öltemperatur 25 im Beharrungszustand und wird von der errechneten Öltemperatur T_{K m} subtrahiert, das Resultat ist die für eine Änderung der Lagertemperatur wirksame Temperaturdifferenz ΔTm. Die eigentliche Temperaturberechnung Lager erfolgt mit einer gegenüber der Öltemperaturberechnung modifizierten Formel, da der zeitliche Verlauf der Temperaturänderung im Lager mit einer Verzögerung auf den Wärmeeintrag folgt, da die Kupplungsbauteile zwischen dem Ort der Wärmefreisetzung, nämlich dem Übertragungsbereich 1 und dem Lager 2 aufgrund ihrer Wärmekapazität eine zeitliche Pufferfunktion übemehmen.

Die errechnete Lagertemperatur 24 kann dann in einem Lastkollektiv akkumuliert werden, aus der Verweildauer des Lagers bei einer bestimmten Temperatur kann auf die zu erwartende Lebensdauer geschlossen werden.

Die Lagertemperatur 24 kann, wie die Öltemperatur 25, auch aktiv zur Steuerung der Lüfterdrehzahl herangezogen werden. Nach Überschreiten einer bestimmten kritischen Lagertemperatur kann - gemäß Ergebnis eines weiteren Komparators 15.3 bzw. Logik 15.4 - der Lüfter in den temperaturunkritischen Zustand der vollen Zuschaltung geschaltet werden.

Zusammenfassend geht die Erfindung aus von einer Drehzahlregeleinrichtung 10 für eine Kupplung 20 zum Antrieb einer Maschine, insbesondere für eine Regelkupplung zum Antrieb einer Strömungsmaschine, vorzugsweise einem Lüfter, zur Regelung einer Maschinendrehzahl, aufweisend: ein Rechenglied 11 mit einem Algorithmus 13 zur Berechnung einer Kupplungstemperatur T_{Km} aus zugeführter, abgeführter und gespeicherter Wärmeleistung der Kupplung 20; eine erste Logikeinheit 15 mit einem ersten Komparator 15.1 zum Vergleich der berechneten Kupplungstemperatur T_{Km} mit einem zulässigen Temperaturwert T_{K zul} und einer ersten Logik 15.2 zur Vorgabe einer Steuerdrehzahl n_{L soll TK} in Abhängigkeit vom Vergleich; einem Stellglied 17 und/oder Monitorglied für die Kupplung 20. Die Erfindung hat erkannt, dass eine derartige Drehzahlregeleinrichtung in besonderer Weise im Hinblick auf eine kontinuierlich in der Drehzahl veränderbare Regelkupplung in Form einer Flüssigkeitsreibungskupplung, die dauerhaft mit Schlupf betreibbar ist, auszulegen ist. Eine dem Rechnung tragende Auslegung des Algorithmus zur Bestimmung der Kupplungstemperatur ist gemäß der Erfindung vorgesehen, wobei das Rechenglied weiter aufweist: eine zweite Logikeinheit 16 mit einem zweiten Komparator 16.1 zum Vergleich der Steuerdrehzahl n_{LsollTK} mit einem von einer übergeordneten Steuerung 40, insbesondere einer Motorkühlungssteuerung, vorgegebenen Solldrehzahl n_{L soll}, insbesondere einer Strömungsmaschinen-Solldrehzahl, und einer zweiten Logik 16 zur Vorgabe einer Korrekturdrehzahl n_{L soll Korr} zur Korrektur einer Istdrehzahl n_{L ist}, wobei bei Überschreitung des zulässigen Temperaturwerts T_{K zul} durch die berechnete Kupplungstemperatur T_{Km} zum Herabsetzen der Kupplungstemperatur durch die erste Logik 15-2 die Steuerdrehzahl n_{L soll TK} zur Ermittlung der Korrekturdrehzahl n_{L soll korr} vorgebbar ist.

## Patentansprüche

1. Drehzahlregeleinrichtung (10) für Regelkupplung zum Antrieb einer Strömungsmaschine zur Regelung einer Maschinendrehzahl, aufweisend:
- ein Rechenglied (10) mit einem Algorithmus (13) zur Berechnung einer Kupplungstemperatur (T_{Km}) aus zugeführter, abgeführter und gespeicherter Wärmeleistung der Kupplung (20);
- eine erste Logikeinheit (15) mit einem ersten Komparator (15.1) zum Vergleich der berechneten Kupplungstemperatur (T_{Km}) mit einem zulässigen Temperaturwert (T_{Kzul}) und einer ersten Logik (15.2) zur Vorgabe einer Steuerdrehzahl (n_{LsollTK}) in Abhängigkeit vom Vergleich;
- einem Stellglied (17) und/oder Monitorglied für die Kupplung (20);
**dadurch gekennzeichnet dass**
- der Algorithmus (13) zur Bestimmung der Kupplungstemperatur für eine kontinuierlich in der Drehzahl veränderbare Regelkupplung in Form einer Flüssigkeitsreibungskupplung, die dauerhaft mit Schlupf betreibbar ist, ausgelegt ist und
- das Rechenglied (11) weiter aufweist:
eine zweite Logikeinheit (16) mit einem zweiten Komparator (16.1) zum Vergleich der Steuerdrehzahl (n_{LsollTK}) mit einem von einer übergeordneten Motorkühlungssteuerung vorgegebenen Solldrehzahl (n_{Lsoll}), nämlich einer Strömungsmaschinen-Solldrehzahl, und einer zweiten Logik zur Vorgabe einer Korrekturdrehzahl (n_{Lsollkorr}) zur Korrektur einer Istdrehzahl (n_{List}), wobei bei Überschreiten des zulässigen Temperaturwerts (T_{Kzul}) durch die berechnete Kupplungstemperatur (T_{Km}) zum Herabsetzen der Kupplungstemperatur durch die erste Logik (15.2) die Steuerdrehzahl (n_{LsollTK}) zur Ermittlung der Korrekturdrehzahl (n_{Lsollkorr}) vorgebbar ist und wobei das Stellglied (17) aufweist:
- einen Regler (17.1) für eine von der Korrekturdrehzahl (n_{Lsollkorr}) korrigierte Istdrehzahl (n_{List}) zur Erzeugung eines Stellsignals (PWM) unter Berücksichtigung eines von der Korrekturdrehzahl (n_{Lsollkorr}) und/oder einer Antriebsdrehzahl (n_{A}) ausgelösten Kennfeldwerts (17.2).

2. Drehzahlregeleinrichtung (10) nach Anspruch 1, **dadurch gekennzeichnet, dass** der Algorithmus zur Bestimmung der Kupplungsflüssigkeitstemperatur unter dauerhaftem Schlupf ausgelegt ist.

3. Drehzahlregeleinrichtung (10) nach einem der Ansprüche 1 oder 2, **dadurch gekennzeichnet, dass** der Algorithmus zur Bestimmung einer zugeführten Wärmeleistung aus einer in Form einer Schlupfleistungskennlinie hinterlegten Differenz aus Kupplungsantriebsdrehzahl und Kupplungsabtriebsdrehzahl ausgelegt ist.

4. Drehzahlregeleinrichtung (10) nach einem der Ansprüche 1 bis 3, **dadurch gekennzeichnet, dass** der Algorithmus zur Bestimmung einer abgeführten Wärmeleistung aus einer Wärmeableitungskennlinie ausgelegt ist.

5. Drehzahlregeleinrichtung (10) nach einem der Ansprüche 1 bis 4, **dadurch gekennzeichnet, dass** der Algorithmus zur Bestimmung der Wärmeableitung einer Verbindung (3) zwischen einem Übertragungsbereich (1) und einem Kupplungshauptlager (2) ausgelegt ist.

6. Drehzahlregeleinrichtung (10) nach einem der Ansprüche 1 bis 5, **dadurch gekennzeichnet, dass** der Algorithmus zur Bestimmung der Lagerflüssigkeit des Kupplungshauptlagers (2) ausgelegt ist.

7. System (100) aus Drehzahlregeleinrichtung (10) nach einem der Ansprüche 1 bis 6 und einer übergeordneten Motorkühlungssteuerung, mit einer zweiten Logikeinheit (16), aufweisend einen mit der übergeordneten Steuerung (40) signalverbundenen Eingang für die Solldrehzahl (n_{Lsoll}) und einen mit der ersten Logikeinheit (15) signalverbundenen Eingang für die Steuerdrehzahl (n_{LsollTK}).

8. System (100) nach Anspruch 7 aufweisend Betriebsparameter-Eingänge für einen oder mehrere Betriebsparameter (T_{K}, T_{L}, T_{R}, M_{Motor}, A_{C}, sonstige) ausgewählt aus der Gruppe bestehend aus: Motordrehzahl, Motorbelastung, Fahrgeschwindigkeit eines Fahrzeugs.

9. Regelkupplung (20) zum Antrieb einer Strömungsmaschine, die kontinuierlich in der Drehzahl veränderbar ist, in Form einer Flüssigkeitsreibungskupplung, die dauerhaft mit Schlupf betreibbar ist, mit einer Drehzahlregeleinrichtung (10) nach einem der Ansprüche 1 bis 6.

10. Regelkupplung (20) nach Anspruch 9 mit einem Antriebs-Kupplungsteil, das über eine Welle mit einem Antrieb verbunden ist und einem AbtriebsKupplungsteil, das mit einem strömungserzeugenden Drehteil, insbesondere einem drehbaren Gehäuse, verbunden ist, und einer dazwischen in einem Übertragungsbereich (1) angeordneten Kupplungsflüssigkeit, deren Menge infolge eines Stellsignals (PWM) eines Stellgliedes (17) einstellbar ist.

11. Strömungsmaschine (30) aufweisend ein strömungs-erzeugendes Drehteil, einen Antrieb und eine zwischen Antrieb und Drehteil angeordnete drehmoment-übertragende Regelkupplung (20) nach Anspruch 9 oder 10.

12. Kühlsystem (200) aufweisend eine Strömungsmaschine (30) nach Anspruch 11 und einen Wärmetauscher (50).

13. Verfahren zur Drehzahlregelung für eine Kupplung (20) zum Antrieb einer Maschine (30), mit einer Drehzahlregeleinrichtung (10) nach einem der Ansprüche 1 bis 6 und/oder einem System (100) nach Anspruch 7 oder 8, bei dem eine Maschinendrehzahl geregelt wird, aufweisend die Schritte:
- Berechnen einer Kupplungstemperatur (T_{Km}) aus zugeführter, abgeführter und gespeicherter Wärmeleistung der Kupplung;
- Vergleichen der berechneten Kupplungstemperatur (T_{Km}) mit einem zulässigen Temperaturwert (T_{Kzul}) und Vorgeben einer Steuerdrehzahl (n_{LsollTK}) in Abhängigkeit vom Vergleich
- Einstellen und/oder Monitoren eines Betriebszustandes der Kupplung (20);
**dadurch gekennzeichnet dass**
- für eine kontinuierlich in der Drehzahl veränderbare Regelkupplung in Form einer Flüssigkeitsreibungskupplung, die dauerhaft mit Schlupf betrieben wird, eine Kupplungstemperatur bestimmt wird;
- die Steuerdrehzahl (n_{LsollTK}) mit einer von einer übergeordneten Motorkühlungssteuerung vorgegebenen Solldrehzahl (n_{Lsoll}), nämlich einer Strömungsmaschinen-Solldrehzahl, verglichen wird und eine Korrekturdrehzahl (n_{Lsollkorr}) vorgegeben und eine Istdrehzahl (n_{Kist}) korrigiert wird, wobei
- bei Überschreiten des zulässigen Temperaturwerts (T_{Kzul}) durch die berechnete Kupplungstemperatur (T_{Km}) zum Herabsetzen der Kupplungstemperatur eine Steuerdrehzahl (n_{LsollTK}) zur Ermittlung der Korrekturdrehzahl (n_{Lsollkorr}) vorgegeben wird.

14. Verfahren nach Anspruch 13, **dadurch gekennzeichnet, dass** nach Vorgabe einer Korrekturdrehzahl (n_{Lsollkorr}), die Kupplung (20) in größtmöglichem Eingriff und/oder bei kleinstmöglichem Schlupfwert betrieben wird.

## Claims

1. A speed regulation device (10) for the control coupling for driving a turbomachine in order to regulate a machine speed, having:
- a calculating element (10) with an algorithm (13) for calculating a coupling temperature (T_{Km}) from supplied, discharged and stored thermal power of the coupling (20);
- a first logic unit (15) with a first comparator (15.1) for comparing the calculated coupling temperature (T_{Km}) with an allowable temperature value (T_{Kzul}) and a first logic (15.2) for specifying a control speed (n_{LsollTK}) depending on the comparison;
- an actuator (17) and/or a monitor element for the coupling (20);
**characterised in that**
- the algorithm (13) is configured for determining the coupling temperature for a control coupling whose speed can be constantly changed and which is in the form of a liquid friction coupling which can permanently be operated with slip, and
- the calculating element (11) further has:
a second logic unit (16) with a second comparator (16.1) for comparing the control speed (n_{LsollTK}) with a set speed (n_{Lsoll}) predetermined by a superior engine cooling control, i.e. a set turbomachine speed, and a second logic for specifying a correction speed (n_{Lsollkorr}) for correcting an actual speed (n_{List}), wherein, on exceeding the allowable temperature value (T_{Kzul}) by the calculated coupling temperature (T_{Km}), the control speed (n_{LsollTK}) can be predeterminable for determining the correction speed (n_{Lsollkorr}) in order to reduce the coupling temperature by the first logic (15.2) and wherein the actuator (17) has:
- a regulator (17.1) for an actual speed (n_{List}) corrected by the correction speed (n_{Lsollkorr}) in order to generate an actuating signal (PWM) under consideration of a mapping value (17.2) triggered by the correction speed (n_{Lsollkorr}) and/or a drive speed (n_{A}) .

2. The speed regulation device (10) according to claim **1, characterised in that** the algorithm is configured for determining the coupling liquid temperature under constant slip.

3. The speed regulation device (10) according to one of claims 1 or 2, **characterised in that** the algorithm is configured for determining a supplied thermal power from a difference of coupling drive speed and coupling output speed stored in the form of a slip performance characteristic curve.

4. The speed regulation device (10) according to one of claims 1 to 3, **characterised in that** the algorithm is configured for determining a discharged thermal power from a thermal discharge characteristic curve.

5. The speed regulation device (10) according to one of claims 1 to 4, **characterised in that** the algorithm is configured for determining the heat discharge of a connection (3) between a transfer region (1) and a coupling main bearing (2).

6. The speed regulation device (10) according to one of claims 1 to 5, **characterised in that** the algorithm is configured for determining the bearing liquid of the coupling main bearing (2).

7. A system (100) of a speed regulation device (10) according to one of claims 1 to 6 and a superior engine cooling control, with a second logic unit (16), having an input for the set speed (n_{Lsoll}) connected by signal to the superior control (40), and an input for the control speed (n_{LsollTK}) connected by signal to the first logic unit (15).

8. The system (100) according to claim 7, having operating parameter inputs for one or more operating parameters (T_{K}, T_{L}, T_{R}, M_{Motor}, A_{C}, others) selected from the group consisting of: engine speed, engine load, travel velocity of a vehicle.

9. A control coupling (20) for driving a turbomachine and whose speed can be constantly changed, in the form of a liquid friction coupling which can permanently be operated with slip, with a speed regulation device (10) according to one of claims 1 to 6.

10. The control coupling (20) according to claim 9, with a drive coupling part which is connected to a drive via a shaft, and an output coupling part which is connected to a flow-generating rotating part, in particular a rotatable housing, and a coupling liquid arranged therebetween in a transfer region (1), whose amount can be adjusted following an actuating signal (PWM) of an actuator (17).

11. A turbomachine (30), having a flow-generating rotating part, a drive and a speed-transferring control coupling (20) according to claim 9 or 10 arranged between the drive and the rotating part.

12. A cooling system (200), having a turbomachine (30) according to claim 11 and a heat exchanger (50).

13. A method for speed regulation for a coupling (20) for driving a machine (30), with a speed regulation device (10) according to one of claims 1 to 6 and/or a system (100) according to claim 7 or 8, for which a machine speed is regulated, having the steps:
- calculating a coupling temperature (T_{Km}) from supplied, discharged and stored thermal power of the coupling;
- comparing the calculated coupling temperature (T_{Km}) with an allowable temperature value (T_{Kzul}) and specifying a control speed (n_{LsollTK}) depending on the comparison;
- adjusting and/or monitoring an operational state of the coupling (20);
**characterised in that**
- a coupling temperature is determined for a control coupling whose speed can be constantly changed and which is in the form of a liquid friction coupling which can permanently be operated with slip;
- the control speed (n_{LsollTK}) is compared with a set speed (n_{Lsoll}) predetermined by a superior engine cooling control, i.e. a set turbomachine speed, and a correction speed (n_{Lsollkorr}) is specified and an actual speed (n_{List}) is corrected, wherein
- on exceeding the allowable temperature value (T_{Kzul}) by the calculated coupling temperature (T_{Km}), a control speed (n_{LsollTK}) is predetermined for determining the correction speed (n_{Lsollkorr}) in order to reduce the coupling temperature.

14. The method according to claim 13, **characterised in that** according to the specification of a correction speed (n_{Lsollkorr}), the coupling (20) is operated with the largest possible engagement and/or with the smallest possible slip value.

## Revendications

1. Dispositif de régulation de vitesse de rotation (10) pour un embrayage de régulation destiné à l'entraînement d'une turbomachine, ledit dispositif servant à la régulation d'une vitesse de rotation de la machine et présentant :
- un organe de calcul (10) comprenant un algorithme (13) servant au calcul d'une température d'embrayage (T_{Km}) à partir d'une puissance calorifique de l'embrayage (20), qui a été fournie, évacuée et stockée ;
- une première unité logique (15) comprenant un premier comparateur (15.1) servant à faire la comparaison entre la température d'embrayage calculée (T_{Km}) et une valeur de température admissible (T_{Kzul}), et comprenant une première logique (15.2) servant à prédéfinir une vitesse de rotation de commande (n_{LsollTK}) en fonction de la comparaison ;
- un actionneur (17) et / ou un élément de surveillance pour l'embrayage (20) ;
**caractérisé**
- **en ce que** l'algorithme (13) est conçu pour servir à la détermination de la température d'embrayage pour un embrayage de régulation pouvant être modifié en continu concernant la vitesse de rotation, ledit embrayage de régulation se présentant sous la forme d'un embrayage à friction de liquide, embrayage qui peut être actionné en fonctionnant en permanence par glissement, et
- **en ce que** l'organe de calcul (11) présente en outre :
une deuxième unité logique (16) comprenant un deuxième comparateur (16.1) servant à faire la comparaison entre la vitesse de rotation de commande (n_{LsollTK}) et une vitesse de rotation théorique (n_{Lsoll}), à savoir une vitesse de rotation théorique de la turbomachine, vitesse qui est prédéfinie par une commande de refroidissement du moteur disposée en amont, et comprenant une deuxième logique servant à prédéfinir une vitesse de rotation de correction (n_{Lsollkorr}) servant à la correction d'une vitesse de rotation réelle (n_{List}), où, en cas de dépassement de la limite supérieure de la valeur de température admissible (T_{Kzul}), par la température d'embrayage calculée (T_{Km}), la vitesse de rotation de commande (n_{LsollTK}) servant à rechercher la vitesse de rotation de correction (n_{Lsollkorr}) peut être prédéfinie par la première logique (15.2), dans le but de faire baisser la température de l'embrayage, et où l'actionneur (17) présente :
- un régulateur (17.1) pour une vitesse de rotation réelle (n_{List}) corrigée par la vitesse de rotation de correction (n_{Lsollkorr}), ledit régulateur servant à la production d'un signal de réglage (PWM) en tenant compte d'une valeur de diagramme caractéristique (17.2) déclenchée par la vitesse de rotation de correction (n_{Lsollkorr}) et / ou par une vitesse de rotation d'entraînement (n_{A}).

2. Dispositif de régulation de vitesse de rotation (10) selon la revendication 1, **caractérisé en ce que** l'algorithme est conçu pour servir à la détermination de la température du liquide d'embrayage en cas de fonctionnement permanent par glissement.

3. Dispositif de régulation de vitesse de rotation (10) selon l'une des revendications 1 ou 2, **caractérisé en ce que** l'algorithme est conçu pour servir à la détermination d'une puissance calorifique fournie à partir d'une différence entre la vitesse de rotation d'entraînement d'embrayage et la vitesse de rotation de sortie d'embrayage, ladite différence étant présentée sous la forme d'une courbe caractéristique de puissance de glissement.

4. Dispositif de régulation de vitesse de rotation (10) selon l'une quelconque des revendications 1 à 3, **caractérisé en ce que** l'algorithme est conçu pour servir à déterminer, à partir d'une courbe caractéristique de dissipation de chaleur, une puissance calorifique évacuée.

5. Dispositif de régulation de vitesse de rotation (10) selon l'une quelconque des revendications 1 à 4, **caractérisé en ce que** l'algorithme est conçu pour servir à déterminer la dissipation de chaleur d'une liaison (3) existant entre une zone de transmission (1) et un palier principal (2) de l'embrayage.

6. Dispositif de régulation de vitesse de rotation (10) selon l'une quelconque des revendications 1 à 5, **caractérisé en ce que** l'algorithme est conçu pour servir à déterminer le liquide de palier du palier principal (2) de l'embrayage.

7. Système (100) se composant d'un dispositif de régulation de vitesse de rotation (10) selon l'une quelconque des revendications 1 à 6 et se composant d'une commande de refroidissement de moteur disposée en amont, comprenant une deuxième unité logique (16), ledit système présentant une entrée pour la vitesse de rotation théorique (n_{Lsoll}), ladite entrée étant connectée par signal à la commande (40) disposée en amont, et présentant une entrée pour la vitesse de rotation de commande (n_{LsollTK}), ladite entrée étant connectée par signal à la première unité logique (15).

8. Système (100) selon la revendication 7, présentant des entrées de paramètres de fonctionnement pour un ou plusieurs paramètre(s) de fonctionnement (Tₖ, T_{L}, T_{R}, Mₘₒₜₑᵤᵣ, A_{c} et autres paramètres) choisi (s) parmi le groupe se composant : de la vitesse de rotation du moteur, de la charge du moteur, de la vitesse de déplacement d'un véhicule.

9. Embrayage de régulation (20) qui est destiné à l'entraînement d'une turbomachine et qui peut être modifié en continu concernant la vitesse de rotation, ledit embrayage de régulation se présentant sous la forme d'un embrayage à friction de liquide, embrayage qui peut être actionné en fonctionnant en permanence par glissement et qui a un dispositif de régulation de vitesse de rotation (10) selon l'une quelconque des revendications 1 à 6.

10. Embrayage de régulation (20) selon la revendication 9, ayant une pièce d'embrayage d'entraînement qui est reliée à un entraînement par un arbre, et ayant une pièce d'embrayage de sortie qui est reliée à une pièce tournante, en particulier à un carter rotatif, ladite pièce tournante produisant un écoulement, et ayant un liquide d'embrayage se trouvant entre lesdites pièces placées dans une zone de transmission (1), liquide d'embrayage dont la quantité peut être régulée suite à un signal de réglage (PWM) d'un actionneur (17).

11. Turbomachine (30) présentant une pièce tournante produisant un écoulement, présentant un entraînement et un embrayage de régulation (20) selon la revendication 9 ou 10, ledit embrayage de régulation transmettant un couple et étant disposé entre l'entraînement et la pièce tournante.

12. Système de refroidissement (200) présentant une turbomachine (30) selon la revendication 11, et un échangeur de chaleur (50).

13. Procédé mis en oeuvre pour la régulation de vitesse de rotation pour un embrayage (20) destiné à l'entraînement d'une machine (30), comprenant un dispositif de régulation de vitesse de rotation (10) selon l'une quelconque des revendications 1 à 6 et / ou comprenant un système (100) selon la revendication 7 ou 8, système dans lequel est régulée une vitesse de rotation de la machine, ledit procédé comprenant les étapes consistant :
- à calculer une température d'embrayage (T_{Km}) à partir d'une puissance calorifique de l'embrayage, ladite puissance calorifique étant fournie, évacuée et stockée ;
- à comparer la température d'embrayage calculée (T_{Km}), à une valeur de température admissible (T_{Kzul}) , et à prédéfinir une vitesse de rotation de commande (n_{LsollTK}) en fonction de la comparaison ;
- à régler et / ou à surveiller un état de fonctionnement de l'embrayage (20) ;
**caractérisé**
- **en ce qu'**une température d'embrayage est déterminée pour un embrayage de régulation pouvant être modifié en continu concernant la vitesse de rotation et se présentant sous la forme d'un embrayage à friction de liquide, embrayage qui est actionné en fonctionnant en permanence par glissement ;
- **en ce que** la vitesse de rotation de commande (n_{LsollTK}) est comparée à une vitesse de rotation théorique (n_{Lsoll}), à savoir une vitesse de rotation théorique de la turbomachine, ladite vitesse de rotation théorique étant prédéfinie par une commande de refroidissement de moteur disposée en amont, et en ce qu'une vitesse de rotation de correction (n_{Lsollkorr}) est prédéfinie et qu'une vitesse de rotation réelle (n_{Kist}) est corrigée, où,
- en cas de dépassement de la limite supérieure de la valeur de température admissible (T_{Kzul}), par la température d'embrayage calculée (T_{Km}), une vitesse de rotation de commande (n_{LsollTK}) servant à rechercher la vitesse de rotation de correction (n_{Lsollkorr}) est prédéfinie dans le but de faire baisser la température de l'embrayage.

14. Procédé selon la revendication 13, **caractérisé en ce que**, après prédéfinition d'une vitesse de rotation de correction (n_{Lsollkorr}), l'embrayage (20) est actionné en venant en prise de la manière la plus totale possible et / ou en ayant une valeur de glissement la plus faible possible.
